# EUROPEAN PATENT APPLICATION

(11) **EP 2 474 944 A1**
(43) Date of publication of application: **11.07.2012**
(21) Application number: 12150733.9
(22) Date of filing: 11.01.2012
(51) Int. Cl.: G06Q 10/08

(54) **Method and system for monitoring a dock for trucks**

(30) Priority: 11.01.2011 NL 2005983
(71) Applicant: Forco Holding B.V., 8243 PH Lelystad (NL)
(72) Inventor: Van Wijk, Dirk Willem, 1421 BD Uithoorn (NL); De Swaef, Marc, 2570 Duffel (BE); Daniels, Danny, 2850 Boom (BE)
(74) Representative: Langenhuijsen, Bastiaan Wilhelmus Herman

(57) **Abstract**

The invention relates to a method for monitoring a dock for trucks. The invention also relates to a system for monitoring a dock for trucks, particularly by making use of the method for monitoring a dock for trucks according to the invention.

## Description

The invention relates to a method for monitoring a dock for trucks. The invention also relates to a system for monitoring a dock for trucks, particularly by making use of the method according to the invention.

Distribution of goods takes place on a large scale. Trucks are often used here, wherein the goods for distribution are loaded into the truck, transported and then unloaded at a desired location. Loading usually takes place at a location where the goods are stored, produced and/or assembled, and unloading usually takes place where the goods are further distributed, processed and/or sold. During loading and unloading of the goods use is generally made here of a loading and/or unloading station for trucks, also referred to as dock, which form part of a distribution centre. Because a truck can be positioned relatively closely to the dock, both goods and people can be protected relatively well from (unfavourable) weather conditions. Increases in scale make it increasingly profitable to use one or more docks for loading and unloading goods. In the course of time there has been further innovation in the docks to enable improvement of the loading process and unloading process. Examples of such innovations are automated displacement of a loading floor (dock leveller), automated control of a door construction, detection of the presence and the position of a truck relative to the dock, and application of diverse signalling lights. However, the control and monitoring of the docks by means of local installation of required software generally results in problems as a result of outdated software and installation of required updates. This method of monitoring and control moreover results in limitations in daily use. A further risk is that, if a (part of a) dock malfunctions, this is not always noticed by the relevant dock operator, which may result in dangerous situations.

An object of the invention is to provide a method enabling improved monitoring of a dock for trucks.

The invention provides for this purpose a method of the type stated in the preamble, comprising of: A) collecting status information related to the status of at least a part of a dock operated by a dock operator, B) sending at least a part of the collected status information to a web server administered by a web server administrator, C) the web server administrator generating a web interface provided with at least part of the received status information, and D) the web server administrator providing the dock operator with access to the web interface. The method according to the invention has the significant advantage that use is made of a web server for storage of status information related to the dock(s) and a web interface for (selective) presentation of the status information, whereby a user (dock operator) need only have available a computer (terminal) with an optionally wireless internet connection to be able to consult the status information. The computer can also be formed here by a portable computer such as a PDA. It is hereby no longer necessary for the software to be installed and maintained on any desired computer, which increases the user-friendliness, efficiency and flexibility. An additional advantage of the method according to the invention is that the loading and unloading process taking place in the dock is followed and monitored by multiple parties, the dock operator and the web server administrator, thereby minimizing the risk of a defect of the dock not being noticed (in good time), which is particularly advantageous from a safety viewpoint. When something unusual is noticed in the status information the web server administrator can inform the dock operator, for instance by sending an e-mail or SMS, or by making contact with the dock operator by telephone. In a preferred embodiment the web server administrator can provide other parties, such as a distributor, transporter, (future) owner of the transported goods or (other) end user, with access to (a part of) the status information during step D). Depending on the nature of the party, more or fewer rights for viewing and processing the status information can be granted by the web server administrator. Multiple parties can also be formed by the same entity or person. The dock controller for instance can thus also be the end user. The web server administrator will generally also determine which part of the status information will be visible to a party. The system can optionally be linked to an external information source such as a Warehouse Management System (WMS), an Enterprise Resource Planning (ERP) and/or a Transport Management System (TMS), generally by applying an Application Programming Interface (API). A dock is usually also referred to as a loading and unloading platform (/station/opening), and generally comprises an industrial door for closing the dock, dock equipment and possible dock accessories such as a signal generator (for instance an alarm or indicator light) or such as a detection element (for instance a presence detector). The state and operation of different components of the dock are generally monitored by the dock operator. Examples hereof have already been described in the foregoing and generally relate here to, among others, the position of an access door, in particular an industrial door, of the dock, the position of a loading floor (dock leveller), and the presence and position of a truck in relation to the dock. Examples of common industrial doors are sectional doors, overhead doors, garage doors, high-speed doors, fire doors, sliding doors, rolling doors, folding doors, tilt-up doors and swing doors. The status information collected during step A) preferably relates to a state and/or operation of at least one component forming part of the dock, such as an access door, a displaceable loading floor, a signal generator (such as a signal light) and/or a sensor such as a motion sensor. The status information of as many components as possible is preferably collected during step A) in order to obtain the most complete possible picture of the functioning of the dock, this enhancing the quality of the dock management.

The sending (uploading) of at least a part of the status information to the web server during step B) can take place in diverse ways. It is possible here to opt to send the complete status information or only a selected part thereof to the web server, depending on the wishes of the dock operator. The sending process can take place in continuous manner or in discontinuous manner. Sending status information to the web server in continuous manner entails the sending process not being interrupted. An advantage hereof is that the status information is always up-to-date and therefore provides a realistic picture of the current status of the dock. A drawback is the continuous load on the internet line via which the data are sent to the web server. Alternatively, it is possible to opt for a discontinuous connection, wherein the status information is sent periodically, for instance at fixed times, to the web server, wherein the period has an adjustable duration of for instance between 1 and 600 seconds (10 minutes), whereby there is significantly less loading of the internet line. It is also possible to envisage sending the status information only when there is a change in the status information. When the status information changes it is moreover possible to opt to send the complete status information or only the changed (incremental) part of the status information to the web server. The status information is preferably sent during step B) via a secure connection to the web server. It is possible here to envisage sending the status information in encoded manner to the web server. It is usually also advantageous to verify the authenticity of the status information, wherein the authenticity and the origin of the status information have to be reliable. A possible way of establishing a secure connection between the local network of the dock operator and the web server is by making use of SSH (Secure Shell) and HTTPS (HyperText Transfer Protocol Secure).

In order to increase the interpretability of the web interface for the dock operator it is generally advantageous to visualize at least a part of the status information during step C), preferably in a manner such that a visualized status of a component of the dock substantially corresponds to the actual status of the component. In this way the dock operator can see the current status of the relevant dock at a glance, this enhancing the user-friendliness. Visualizing the current status of the dock, or in any case at least one component thereof, as realistically as possible can for instance be done by means of an animation, a rendered image and/or by showing a camera image. The use of a web cam will be evident in showing a camera image of the dock.

In order to be able to prevent unauthorized parties being able to gain insight into the status of the at least one dock of the dock operator via the web interface, it is advantageous to secure the web interface with a personal access code which is provided to the dock operator by the web server administrator during step D). The personal access code will generally be formed by a unique combination of a name and a password, such as for instance a PIN code.

It is possible to envisage the web interface being a read-only interface via which the dock operator can check the dock status. It is however also possible to envisage the web interface being given an interactive character, wherein it becomes possible for the dock operator to modify the displayed status information via the web interface (step E). It is further possible here to envisage the method also comprising step F), which comprises, following modification of the status information by the dock operator as according to step E), of controlling the dock on the basis of the changed status information. In this way the web interface functions in fact as a type of control panel for the dock operator.

As stated above, it can be advantageous for the method to also comprise step G), comprising of generating a warning to the dock operator when a value forming part of the status information and received by the web server falls outside a predefined value range (remote service). The warning can for instance take the form of an SMS or e-mail. A complete overview is preferably given on the user interface of all docks, including the docks which are reserved for remote service and/or in which a malfunction has occurred. Docks can be reserved manually or automatically for remote service. Dock-related malfunctions can optionally also be solved remotely. It is also possible to envisage changing parameters of a control unit of a dock remotely and optionally controlling a dock remotely. A remote analysis of the malfunction can further be made so that a technician is provided with a clear picture of the nature of the malfunction and the materials required to remedy the malfunction. Unnecessary service visits are hereby avoided, and the efficiency of service visits is considerably increased.

Since a dock operator usually operates a plurality of docks, it is advantageous to collect and process the status information of a plurality of docks in line with the method presented in the foregoing. The docks are generally positioned at one physical location, although it is also possible to envisage a dock operator operating a plurality of docks spread over a plurality of physical locations. The status of all docks can be consulted at a glance via the web interface. It is also possible to envisage at least a number of docks being operated by a dock operator, and wherein at least a number of other docks are operated by at least one other dock operator. The status information of one or more docks of each dock operator can be collected and sent to the collective web server administrator, which is particularly efficient from a practical and financial viewpoint. It will however be generally desirable here for the web server administrator to provide the dock operator with access during step D) to status information relating to docks operated by the dock operator. It will thus be possible to consult status information only concerning one's own docks, and the status information related to competing docks cannot be viewed.

The invention also relates to a system for monitoring a dock for trucks, particularly by applying the method according to the invention, comprising: at least one dock provided with at least one sensor for detecting the state of at least one component forming part of the dock, at least one control unit for collecting status information about the dock and controlling the dock, at least one web server coupled to the control unit for storing status information collected by the control unit, and a secure access web interface for displaying at least a part of the status information. The system will generally comprise a plurality of docks which are administered by the same web server administrator, preferably wherein a number of docks at a first location are operated by a dock operator and wherein a number of other docks at a second location are operated by at least one other dock operator, and wherein the web server is adapted to store status information related to the different docks and the web interface is adapted for secure access display of dock operator-dependent status information. The first location and the second location can optionally be the same here, but are usually different locations. Embodiment variants and advantages of the system according to the invention have already been described at length in the foregoing.

The invention will be elucidated on the basis of non-limitative exemplary embodiments shown in the following figures. Herein:

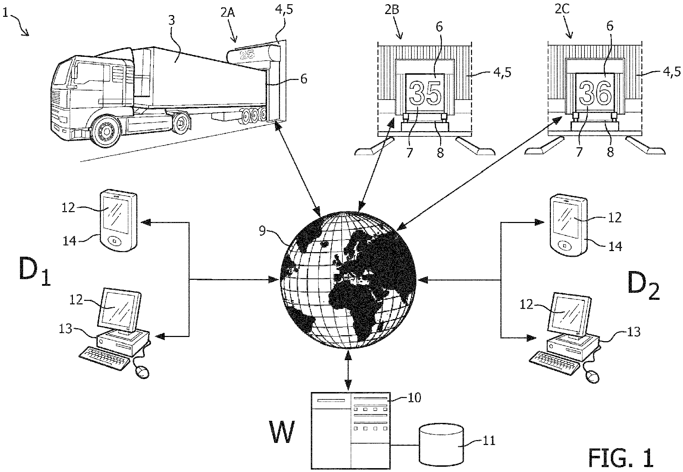

figure 1 shows a schematic view of a system for monitoring docks for trucks according to the invention.

Figure 1 shows a schematic view of a system 1 for monitoring three docks 2a, 2b, 2c for trucks 3 according to the invention. One of the docks 2a, also referred to as loading platform of loading and unloading opening, is operated by a first dock operator D₁. The other two docks 2b, 2c are operated by a second dock operator D₂. In this exemplary embodiment each dock 2a, 2b, 2c forms part of a commercial premises 4 and is bounded by a loading opening 6 which is arranged in a wall 5 of industrial premises 4 and is closable by means of an industrial door 7. Dock 2 also comprises a loading and unloading floor 8 located substantially inside industrial premises 4. The loading and unloading floor 8 can be displaceable in the height, usually referred to as a 'dock leveller', to allow the most precise possible connection of loading and unloading floor 6 to the loading space of truck 3. In the shown exemplary embodiment one of the docks 2a is provided with a truck 3, and so in use. The status of each dock 2a, 2b, 2c, including whether or not docks 2a, 2b, 2c are in use, whether industrial door 7 is opened or closed, the position of loading and unloading floor 8 and the position of truck 3 relative to dock 2a, 2b, 2c, can be detected by means of electrical, mechanical and/or optical sensors (not shown). The status information obtained therefrom per dock 2a, 2b, 2c and per dock operator D₁, D₂ is sent (uploaded) optionally continuously in encoded manner to a web server 10 via internet 9 and stored in a database 11. The web server is administered by a web server administrator W. The web server administrator W provides each dock operator D₁, D₂ with a personal access code (password, such as for instance a PIN code) to enable optionally wireless log-in to a web interface 12 for the purpose of consulting the current (real-time) status information of (only) his own docks 2a, 2b, 2c. Docks 2a, 2b, 2c can be graphically displayed here, wherein the actual status of each dock 2a, 2b, 2c is visualized in corresponding and therefore immediately identifiable manner, this enhancing user-friendliness. This visualization of the current status of dock 2a, 2b, 2c can for instance be in the form of an animation, a rendered image or a camera image (in the case a webcam is applied as optical sensor). The visualization can be displayed on a screen of a computer 13 (terminal) or smartphone (or PDA) 14 of the respective dock operators D₁, D₂. Dock operators D₁, D₂ can optionally be allowed to control their own docks 2a, 2b, 2c via the web interface. It is possible here to envisage multiple access security profiles being assigned to each dock controller D₁, D₂, whereby for instance one or more persons at a dock operator D₁, D₂ are assigned administrator rights (full control), while other persons at the same dock operator D₁, D₂ are assigned (more) limited user rights (limited control, such as for instance read-only authorization). Users who have full rights can be enabled to modify information which is shown via the web interface, wherein it is even possible to envisage that docks 2a, 2b, 2c can be controlled in this manner. The web interface hereby acquires an interactively controllable character. In addition, it is advantageous if the web server administrator W also keeps track of whether components of dock 2a, 2b, 2c are functioning correctly by testing the received status information against predefined critical values. When these values are exceeded or not reached, the web server W can for instance generate a report such as an e-mail or SMS to the relevant dock operator D₁, D₂ in order to warn him.

A further illustrative and therefore non-limitative elucidation is given below of the status information which can be uploaded to web server 10 and consulted via a user interface via a computer 13 or a PDA 14. A distinction is preferably made here between the status information which can be displayed graphically as complete overview and the status information which is linked to a specific dock and can therefore be displayed graphically as dock-specific information.

### Graphic display complete overview

- Docks can be reserved by a dock operator, distributor and/or haulier. When a dock is reserved, the reservation is displayed graphically in the complete overview in which all docks are shown;
- Trucks can be detected using a vehicle detection system. If a vehicle detection system is applied and the vehicle is positioned at or close to a dock, this information can then be displayed graphically in the complete overview;
- Trucks can be identified at the dock. When a vehicle is identified it is displayed graphically in the complete overview. The identification of the vehicle, including for instance licence plate number, haulier data, time of use of the dock and so on, is saved to the web server. These data can for instance be retrieved by a dock operator for his own docks;
- Persons can be identified at the dock. When a person is identified, this is displayed graphically in the complete overview. The identification of a person, including for instance licence plate number, haulier data, time of use of the dock and so on, is saved to the web server;
- Malfunctions occurring on industrial doors and/or dock equipment can be reported proactively via SMS and/or e-mail to at least the dock operator. In the complete overview a malfunction is clearly displayed graphically per dock. Dock equipment is understood to mean, among other equipment: a dock leveller, a dock shelter, lifting tables, loading flaps and dock accessories;
- When a set service parameter is exceeded at the industrial doors and/or dock equipment, this can be reported by SMS and/or e-mail to at least the user. In the complete overview a service report is clearly displayed graphically per dock;
- The complete overview displays graphically whether dock equipment is in use or at rest;
- The complete overview displays graphically the status of an industrial door (opened/half open/closed).

### Graphic display detail overview

The detail overview gives per dock a clear graphic detail display of the relevant dock. An outside and an inside view of the dock are preferably shown here in 3-D. The accessories for possible connection are also shown. The status changes of the components of the dock can be shown in this overview. When a door is opened, an opened door will for instance be visible and when a signal light is physically on red at the dock a red traffic light will light up in the application. This form of graphic display corresponds to the actual situation at the dock. The actual type/model of product can also be shown as far as possible. Further examples of status information which can be shown via a detail overview are:
- Vehicle detection: as soon as a vehicle docks, it can be detected using a vehicle detection system. The detection of the vehicle is displayed graphically in the detail overview. Also displayed graphically is that a vehicle detection system has been activated. Vehicle detection is possible, among other ways, with one or a combination of the following: a vehicle position sensor or a wheel chock with integrated switch;
- Door indication: when a door is fully opened, a fully opened door is shown in the detail overview, and the same applies for a half-opened door and a closed door;
- Dock leveller indication: all positions of the dock leveller can be displayed graphically in real time, i.e. whether it is non-operational or in use;
- Type of dock leveller: the type of dock leveller installed can also be displayed graphically in the detail overview. This provides for a realistic representation of the products which can be shown;
- Dock shelter indication: all positions of the dock shelter can be displayed graphically in real time, i.e. whether it is at rest or in use;
- Type of dock shelter: the type of dock shelter installed can also be displayed graphically in the detail overview. This provides a realistic representation of the products which can be shown;
- Signal light status: whether a signal light is connected can be displayed graphically in the detail overview. When signal lights are connected and are activated, any change in the colour of the signal light can be displayed graphically;
- Vehicle detection: whether a vehicle detection is connected can be displayed graphically in the detail overview. When a vehicle detection is connected and is activated, this will also be clearly shown graphically;
- Security indication: whether a security option is connected can be displayed graphically in the detail overview. When a security option is connected and is activated, this will also be clearly shown graphically;
- Dock light indication: whether a dock light is connected can be displayed graphically in the detail overview. When a dock light is connected and is activated, this will also be clearly shown graphically;
- Siren status: whether a siren is connected can be displayed graphically in the detail overview. When a siren is connected and is activated, this will also be clearly shown graphically;
- Wheel chock status: whether a wheel chock is connected can be displayed graphically in the detail overview. When a wheel chock is connected and is activated, this will also be clearly shown graphically;
- Vehicle and/or person identification: whether a vehicle and/or person identification is connected can be graphically displayed in the detail overview. When a vehicle and/or person identification is connected and is activated, this will also be clearly shown graphically. Identification is possible, among other ways, with an intelligent apparatus provided with an electronic chip with a unique identification, which is stored in a special electronic safe.

A substantially complete loading and/or unloading cycle of a dock can be displayed graphically by visualization of the above stated information.

It will be apparent that the invention is not limited to the exemplary embodiments shown and described here, but that within the scope of the appended claims numerous variants are possible which will be self-evident to the skilled person in this field.

## Claims

1. Method for monitoring a dock for trucks, comprising of:
A) collecting status information related to the status of at least a part of a dock operated by a dock operator,
B) sending at least a part of the collected status information to a web server administered by a web server administrator,
C) the web server administrator generating a web interface provided with at least part of the received status information, and
D) the web server administrator providing the dock operator with access to the web interface.

2. Method as claimed in claim 1, wherein the status information collected during step A) relates to a state of at least one component forming part of the dock.

3. Method as claimed in claim 1 or 2, wherein the status information is collected during step A) by applying at least one sensor forming part of the dock.

4. Method as claimed in claim 3, wherein the sensor is a motion sensor.

5. Method as claimed in any of the foregoing claims, wherein during step B) the status information is sent to the web server when there is a change in the status information.

6. Method as claimed in any of the claims 1-5, wherein during step B) the status information is sent periodically to the web server.

7. Method as claimed in claim 6, wherein during step B) the status information is sent at fixed times to the web server, wherein the period has an adjustable duration, preferably in a range between 1 and 600 seconds.

8. Method as claimed in any of the foregoing claims, wherein during step B) the status information is sent via a secure connection to the web server.

9. Method as claimed in any of the foregoing claims, wherein at least a part of the status information is visualized during step C).

10. Method as claimed in claim 9, wherein at least one component of the dock related to the status information is visualized such that the visualized status of the component substantially corresponds to the actual status of the component.

11. Method as claimed in any of the foregoing claims, wherein the access to the web interface generated during step C) is secured, and wherein the web server administrator provides the dock operator with access data during step D).

12. Method as claimed in any of the foregoing claims, wherein the method also comprises step E), comprising of the dock operator modifying the displayed status information via the web interface.

13. Method as claimed in claim 12, wherein the method also comprises step F), comprising, following modification of the status information by the dock operator as according to step E), of controlling the dock on the basis of the changed status information.

14. Method as claimed in any of the foregoing claims, wherein the method also comprises step G), comprising of generating a warning to the dock operator when a value forming part of the status information and received by the web server falls outside a predefined value range.

15. Method as claimed in any of the foregoing claims, wherein during steps A) - C) the status information of a plurality of docks is collected, sent and displayed.

16. Method as claimed in claim 15, wherein at least a number of docks are operated by a dock operator, and wherein at least a number of other docks are operated by at least one other dock operator.

17. Method as claimed in claim 16, wherein during step D) the web server administrator provides the dock operator with access to status information relating to docks operated by the dock operator.

18. System for monitoring a dock for trucks, particularly by applying the method as claimed in any of the claims 1-17, comprising:
- at least one dock provided with at least one sensor for detecting the state of at least one component forming part of the dock,
- at least one control unit for collecting status information about the dock and controlling the dock,
- at least one web server coupled to the control unit for storing status information collected by the control unit, and
- a secure access web interface for displaying at least a part of the status information.

19. System as claimed in claim 18, wherein the system comprises a plurality of docks, wherein a number of docks are operated by a dock operator and wherein a number of other docks are operated by at least one other dock operator, and wherein the web server is adapted to store status information related to the different docks and the web interface is adapted for secure access display of dock operator-dependent status information.
